(19) Europäisches Patentamt

European Patent Office

Office européen des brevets

(11) **EP 1 357 404 A1**

(12) **EUROPEAN PATENT APPLICATION**
published in accordance with Art. 158(3) EPC

(43) Date of publication:
29.10.2003 Bulletin 2003/44

(51) Int Cl.7: **G02B 6/00**, C03B 37/027

(21) Application number: 01981057.1

(22) Date of filing: 09.11.2001

(86) International application number:
**PCT/JP01/09835**

(87) International publication number:
**WO 02/063354 (15.08.2002 Gazette 2002/33)**

(84) Designated Contracting States:
**AT BE CH CY DE DK ES FI FR GB GR IE IT LI LU MC NL PT SE TR**

(30) Priority: **30.01.2001 JP 2001022158**

(71) Applicant: **Sumitomo Electric Industries, Ltd.**
**Osaka-shi, Osaka 541-0041 (JP)**

(72) Inventors:
• **SASAOKA,E**
**Yokohama Works of Sumitomo Elec.Ind.Ltd.**
**Yokohama-shi, Kanagawa 244-8588 (JP)**

• **ONISHI,M.**
**Yokohama Works of Sumitomo Elec.Ind.Ltd.**
**Yokohama-shi, Kanagawa 244-8588 (JP)**
• **NAGAYAMA,K**
**Yokohama Works of Sumitomo Elec.Ind.Ltd**
**Yokohama-shi, Kanagawa 244-8588 (JP)**

(74) Representative: **HOFFMANN - EITLE**
**Patent- und Rechtsanwälte**
**Arabellastrasse 4**
**81925 München (DE)**

(54) **METHOD AND APPARATUS FOR MANUFACTURING OPTICAL FIBER**

(57) A twist imparting roller 220 with two rotational axes C1, C2 is used as a roller for guiding a coated optical fiber 200. The twist imparting roller 220 rotates about the first rotational axis C1 to guide the coated optical fiber 200 and rotates along a circular locus indicated by a dashed line L2, about the second rotational axis C2 to impart twists to the optical fiber. The coated optical fiber 200 is wound through a turn along a V-groove 221 around the twist imparting roller 220. This suppresses rolling of the coated optical fiber 200 relative to the roller surface of the twist imparting roller 220, so as to efficiently impart the twists to the optical fiber and adequately reduce polarization mode dispersion in the optical fiber.

**Fig.2A**

**(Cont. next page)**

# Fig.2B

201

C2

202

P1

C1

220

P2

221

203

# Fig.2C

C2

201

202

C1

220

203

## Description

## Technical Field

The present invention relates to a method and apparatus for producing an optical fiber.

## Background Art

When an optical fiber is produced by a fiber producing method of heating and softening one end of an optical fiber preform and drawing it into an optical fiber, it is difficult to form the core part of the optical fiber and the cladding part around it, in as-drawn sectional shapes of completely round concentric circles, and they are often formed in slightly elliptic or distorted circle shapes.

For this reason, an index profile in the sectional structure of the optical fiber is not completely concentric, either, and this poses a problem of increase in the polarization dispersion of the optical fiber (PMD: Polarization Mode Dispersion) . When such an optical fiber is used in a submarine cable, a trunk cable, or the like subject to large-capacity and long-haul optical transmission, influence of the polarization mode dispersion appears significant.

For overcoming the problem of polarization mode dispersion as described, there are proposals on methods of imparting twists to the optical fiber during the drawing operation to intentionally cause coupling between polarizations in the optical fiber. Such producing methods include those described in U.S. Pat. No. 5,704,960 (Document 1) and Japanese Patent Application Laid-Open No. H08-295528 (Document 2).

## Disclosure of the Invention

In the both producing methods described in Document 1 and Document 2 above, a coated optical fiber is rolled on a roller surface during the drawing operation of the optical fiber to generate a torque, and this torque imparts twists to the optical fiber. In these methods, the optical fiber can slip on the roller surface, depending upon drawing conditions or states of drawing apparatus, which poses a problem that the adequate torque for imparting the twists to the optical fiber is not generated at the roller part.

Document 2 describes that the coating of the optical fiber and the roller surface preferably have large coefficients of friction, in order to overcome this problem. However, some materials for the roller surface also increase the resistance to rolling of the optical fiber with increase in the coefficient of friction and this can result in failing to impart sufficient twists to the optical fiber. It also describes increasing drawing tension in order to increase the press force against the roller surface. It is, however, difficult to implement satisfactory adjustment by the drawing tension, because of problems of transmission characteristics except for the polarization mode dispersion, conditional restrictions in the drawing apparatus, and so on.

The present invention has been accomplished in order to solve the above problem and an object of the invention is to provide a fiber producing method and producing apparatus capable of effectively imparting twists to an optical fiber during drawing to reduce the polarization mode dispersion satisfactorily in the optical fiber.

In order to achieve the above object, a fiber producing method according to the present invention is a method comprising (1) a first step of drawing an optical fiber from an optical fiber preform, (2) a second step of coating the optical fiber with a predetermined coating material, and (3) a third step of imparting predetermined twists to a coated optical fiber which is the optical fiber coated with the coating material, wherein (4) in the third step, the coated optical fiber is guided while being positioned by a twist imparting roller, and a position of the twist imparting roller is laterally varied, thereby imparting the twists to the coated optical fiber.

A fiber producing apparatus according to the present invention is an apparatus comprising (1) drawing means for drawing an optical fiber from an optical fiber preform, (2) coating means for coating the optical fiber with a predetermined coating material, and (3) twist imparting means for imparting predetermined twists to a coated optical fiber which is the optical fiber coated with the coating material, wherein (4) the twist imparting means comprises a twist imparting roller for guiding the coated optical fiber while positioning the coated optical fiber and the twist imparting means laterally varies a position of the twist imparting roller, thereby imparting the twists to the coated optical fiber.

In the fiber producing method and producing apparatus described above, the twist imparting roller, which is configured so as to be able to vary the roller position laterally (e.g., the roller is rotated about a rotational axis approximately parallel to a guide direction of the coated optical fiber), is provided as a roller for guiding the coated optical fiber. When the position of the twist imparting roller is laterally varied, torsion occurs in the coated optical fiber. Then this torsion is transmitted to the heated and softened glass part of the optical fiber, whereby the desired twists can be imparted to the optical fiber.

The twist imparting roller, which is used for imparting the twists to the optical fiber while functioning as a guide roller as described above, is configured in structure wherein the coated optical fiber is guided in a state in which it is positioned relative to the roller (for example, in structure wherein the coated optical fiber is wound on the roller by at least one turn). This suppresses rolling of the coated optical fiber relative to the roller surface of the twist imparting roller.

By suppressing the rolling of the coated optical fiber in this way, it becomes feasible to apply an adequate torque to the optical fiber, independent of the drawing conditions and others. This realizes the fiber producing method and producing apparatus capable of effectively imparting the twists to the optical fiber during the drawing operation and satisfactorily reducing the polarization mode dispersion while suitably maintaining the other transmission characteristics in the optical fiber.

In the case of the structure wherein the coated optical fiber is wound on the twist imparting roller, the number of winding turns of the coated optical fiber on the twist imparting roller is preferably adequately set in the range of one turn to several turns, according to the structure of the twist imparting roller, the position of the rotational axis thereof, configurations of the other parts of the drawing apparatus, or the like.

**Brief Description of the Drawings**

Fig. 1 is a schematic diagram schematically showing an embodiment of the optical fiber producing apparatus.

Figs. 2A to 2C are diagrams showing a configuration of an embodiment of the twist imparting roller applied to the optical fiber producing apparatus shown in Fig. 1.

Fig. 3 is a top plan view showing a configuration example of a driving means for driving the twist imparting roller shown in Figs. 2A to 2C.

Fig. 4 is a side view of the driving means for the twist imparting roller shown in Fig. 3.

Fig. 5 is a side view of the driving means for the twist imparting roller shown in Fig. 3.

Figs. 6A to 6D are graphs showing examples of rotation patterns of the twist imparting roller.

Figs. 7A to 7C are diagrams showing a configuration of another embodiment of the twist imparting roller applied to the optical fiber producing apparatus shown in Fig. 1.

**Best Mode for Carrying out the Invention**

The preferred embodiments of the optical fiber producing method and producing apparatus according to the present invention will be described below in detail with reference to the drawings. In the description of the drawings the same elements will be denoted by the same reference symbols and redundant description will be omitted. It is also noted that the dimensional ratios in the drawings do not always agree with those in the description.

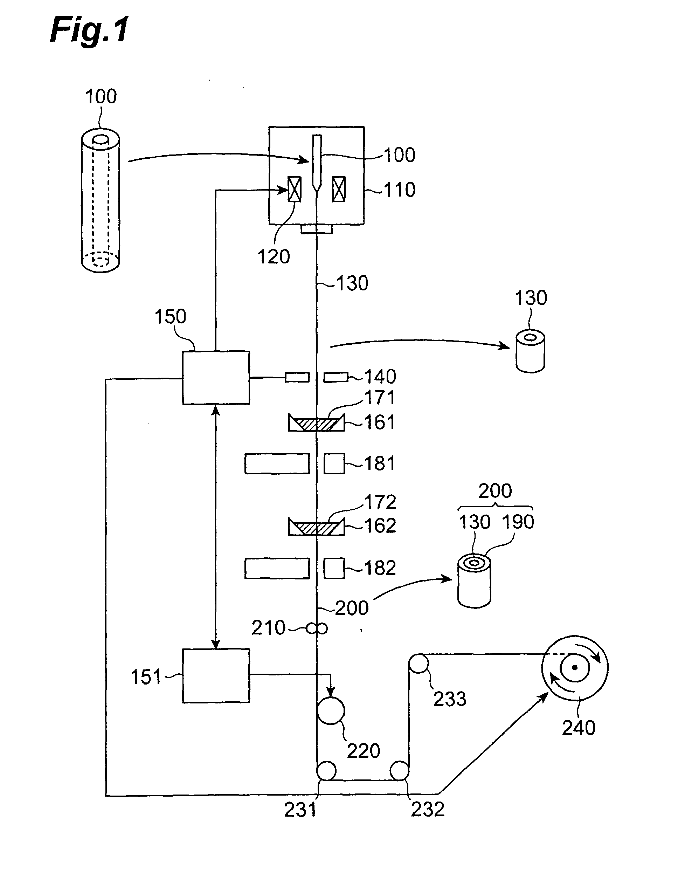

Fig. 1 is a schematic illustration schematically showing an embodiment of the optical fiber producing apparatus according to the present invention. The configuration of this producing apparatus will be described below along with the optical fiber producing method according to the present invention.

In the optical fiber producing apparatus shown in Fig. 1, and in the optical fiber producing method using it, an optical fiber preform 100 having the core part and cladding part is first prepared. This optical fiber preform 100 is prepared by the vapor-phase axial deposition method (VAD method), the outside vapor deposition method (OVD method), the modified chemical vapor deposition method (MCVD method), the rod in tube method, or the like.

Then drawing of optical fiber is carried out at a drawing section (drawing means) including a drawing furnace 110 and a heater 120 (the first step). The optical fiber preform 100 is set in the drawing furnace 110, the lower end of the optical fiber preform 100 is thereafter heated and softened by the heater 120 in the drawing furnace 110, and the lower end is drawn into an optical fiber 130. The drawing conditions at this time are adequately set according to the specific structure of the producing apparatus, the configuration of the optical fiber preform, and so on; for example, the drawing speed $V_p$ is set at 100 m/min.

Subsequently, the outside diameter of the optical fiber 130 thus drawn is measured by laser diameter meter 140. The result of the measurement is fed to drawing control unit 150. Then the drawing control unit 150 controls the drawing conditions including the heating temperature of the heater 120, the drawing speed $V_p$, etc. so that the outside diameter of the optical fiber 130 is maintained at a predetermined value, e.g., 125 μm, based on the measurement result.

Thereafter, the optical fiber 130 is coated by a coating section (coating means) including resin coating dies 161, 162 and UV lamps 181, 182 (the second step).

The optical fiber 130 is first guided through liquid resin 171, which is a coating material stored in the first resin coating die 161, to deposit the resin of the first layer on the surface of the optical fiber 130. Then the optical fiber 130 with the resin of the first layer deposited thereon is exposed to UV light from the UV lamp 181 to cure the resin of the first layer.

Likewise, the optical fiber 130 is guided through liquid resin 172 stored in the second resin coating die 162, to deposit the resin of the second layer on the resin surface of the first layer on the optical fiber 130. The optical fiber 130 with the resin of the second layer deposited thereon is then exposed to UV light from the UV lamp 182 to cure the resin of the second layer. This yields a coated optical fiber 200 in which the surface of the optical fiber 130 is covered (or coated) with a resin coating 190 consisting of the resins of two layers. The outside diameter of the coating in the optical fiber 200 at this time is, for example, 250 μm.

Subsequently, predetermined twists are imparted to the coated optical fiber 200 by a twist imparting section (twist imparting means) including a twist imparting roller 220 (the third step). The coated optical fiber 200, to which the predetermined twists are imparted via the twist imparting roller 220, is successively guided by stationary guide rollers 231, 232, and 233 disposed downstream of the twist imparting roller 220, to be wound up eventually onto a drum 240. Guide rollers (e. g., stationary guide rollers 210 shown in Fig. 1) are also provided according to need, upstream of the twist imparting roller 220.

In the present embodiment the twist imparting roller 220 is configured to guide the coated optical fiber 200 while positioning it. Then the twist imparting section including this twist imparting roller 220 varies the position of the twist imparting roller 220 in the lateral directions of the roller, thereby imparting the twists to the coated optical fiber 200.

A twist impartment control unit 151 is provided for the twist imparting section. This twist impartment control unit 151 controls the operation of the twist imparting section, including the lateral variation in the position of the twist imparting roller 220, so as to impart the desired twists to the coated optical fiber 200.

The following will describe the effects of the optical fiber producing apparatus shown in Fig. 1 and the optical fiber producing method using it.

In the above-stated optical fiber producing apparatus and the optical fiber producing method using it, the twist imparting roller 220, configured to enable the lateral variation in the roller position, is provided as a roller for guiding the coated optical fiber 200. When the position of the twist imparting roller 220 is laterally varied, torsion occurs in the coated optical fiber 200. When this torsion is transmitted to the heated and softened glass part of the optical fiber, the desired twists can be imparted to the optical fiber.

The twist imparting roller 220, used for the impartment of twists to the optical fiber while also functioning as a guide roller as described above, is configured so that the coated optical fiber 200 is guided in a state in which it is positioned relative to the roller. This restrains the rolling of the coated optical fiber 200 relative to the roller surface of the twist imparting roller 220.

By restraining the rolling of the coated optical fiber 200 in this way, it becomes feasible to apply an adequate torque to the optical fiber, independent of the drawing conditions and others. This realizes the optical fiber producing method and producing apparatus capable of effectively imparting the twists to the optical fiber during the drawing operation and satisfactorily reducing the polarization mode dispersion while suitably maintaining the other transmission characteristics in the optical fiber.

In the optical fiber producing apparatus shown in Fig. 1, the twist impartment control unit 151 is provided for the twist imparting section including the twist imparting roller 220. This unit controls the operation of the twist imparting section including the twist imparting roller 220 according to an operation pattern corresponding to the twists to be imparted to the optical fiber, thereby suitably executing the impartment of the twists to the coated optical fiber 200.

The optical fiber producing method and producing apparatus according to the present invention will be described in further detail.

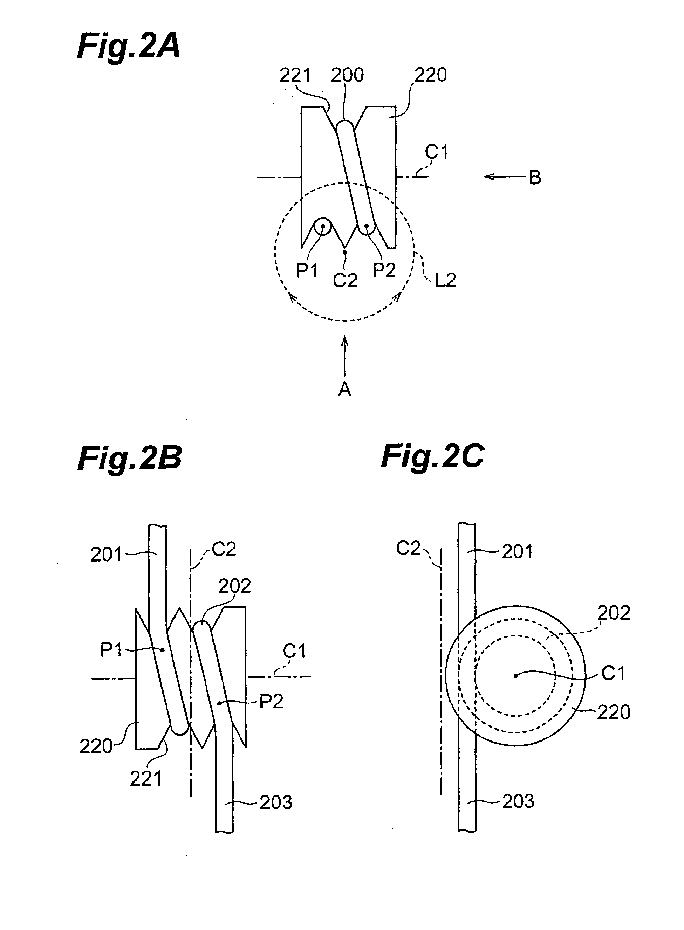

Figs. 2A to 2C are illustrations showing a configuration of an embodiment of the twist imparting roller 220 applied to the optical fiber producing apparatus shown in Fig. 1. Fig. 2A is a top plan view of the twist imparting roller 220 from the drawing section and coating section side (i.e., from the vertically upper side). Fig. 2B is a side view from the direction of arrow A in Fig. 2A, and Fig. 2C a side view from the direction of arrow B. The coated optical fiber 200 is guided from top to bottom via the twist imparting roller 220 on the side views of Figs. 2B and 2C.

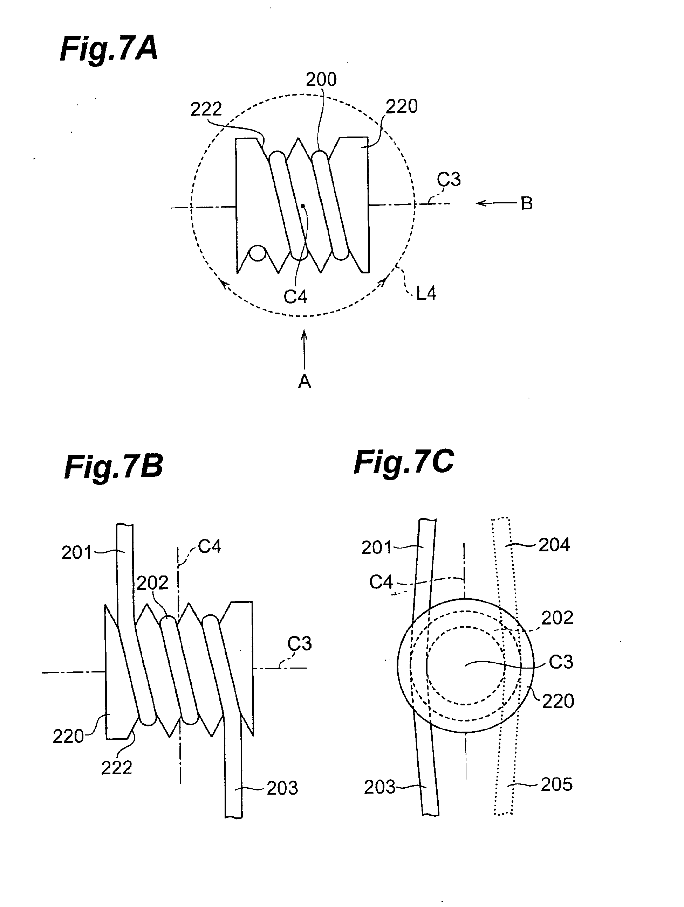

In each of Figs. 2A-2C and Figs. 7A-7C cited hereinafter, among the coated optical fiber 200 guided by the twist imparting roller 220, a portion in contact with the roller surface of the twist imparting roller 220 is defined as a contact portion 202, and upstream and downstream (vertically upper and lower in Fig. 1) portions of the contact portion 202 are defined as a pre-portion 201 and as a post-portion 203, respectively. This division is merely for convenience' sake of description, and in the optical fiber producing steps, the coated optical fiber 200 is guided by the twist imparting roller 220 so that each part of the coated optical fiber 200 is sequentially located at the pre-portion 201, the contact portion 202, and the post-portion 203.

In this twist imparting roller 220, as shown in Figs. 2A and 2B, a V-shaped narrow groove (hereinafter referred to as a V-groove) 221 is made in its roller surface. The V-groove 221 functions as a rolling preventing mechanism for preventing the coated optical fiber 200 from rolling relative to the roller surface of the twist imparting roller 220.

This V-groove 221 is formed through an approximately one turn in the roller surface of the twist imparting roller 220 by V-groove working. In the producing apparatus shown in Fig. 1, the coated optical fiber 200, having passed the drawing section and the coating section, is fitted in the V-groove 221 at the twist imparting roller 220 functioning as a guide roller, to be wound through a turn around the twist imparting roller 220 along the V-groove 221.

The twist imparting roller 220 has two rotational axes, a first rotational axis C1 for guiding the coated optical fiber 200 and a second rotational axis C2 for imparting the twists to the coated optical fiber 200. The twist imparting roller 220 smoothly rotates about the first rotational axis C1 like the ordinary rollers, thereby guiding the coated optical fiber 200, as a guide roller.

Furthermore, the twist imparting roller 220 is configured to be able to rotate along a circular locus indicated by a dashed line L2 on the top plan view of Fig. 2A, about the second rotational axis C2. Here the second rotational axis C2 is set approximately in parallel to the guide direction of the coated optical fiber 200. Accordingly, the rotational motion about the rotational axis C2 causes the twist imparting roller 220 to rotate in the lateral direction of the roller on the horizontal plane approximately normal to the guide direction of the coated optical fiber 200.

For the twist imparting roller 220 in the present embodiment, the second rotational axis C2 is set relative to the coated optical fiber 200 guided by the twist imparting roller 220 so that variation in the guide position of the coated optical fiber 200 becomes approximately minimum at the pre-portion 201 and the post-portion 203 being the upstream and downstream portions of the contact portion 202 with the roller surface of the twist imparting roller 220.

Specifically, with respect to the pre-portion-201-side end (front end) P1 of the contact portion 202 and the post-portion-203-side end (rear end) P2 of the contact portion 202, the rotational axis C2 is set so as to pass the predetermined position near the ends P1, P2. This minimizes the variation in the positions of the ends P1 and P2, i.e., the variation in the guide positions of the coated optical fiber 200 before and after the contact portion 202 while the twist imparting roller 220 rotates about the second rotational axis C2.

The following will describe the effects of the optical fiber producing apparatus with the twist imparting roller shown in Figs. 2A-2C, and the optical fiber producing method using it.

In the optical fiber producing method and producing apparatus of the present embodiment, as a twist imparting roller 220 for guiding the coated optical fiber 200 while imparting the twists thereto, there is provided the twist imparting roller 220 capable of rotating about the first rotational axis C1 to guide the coated optical fiber 200 and capable of rotating about the second rotational axis C2 approximately parallel to the guide direction of the coated optical fiber 200. When the twist imparting roller 220 is rotated in the lateral direction of the roller about the rotational axis C2, torsion occurs in the coated optical fiber 200. Then this torsion is transmitted to the heated and softened glass part of the optical fiber whereby the desired twists can be imparted to the optical fiber.

The coated optical fiber 200 is wound through a turn on the twist imparting roller 220 functioning as a guide roller and used for the impartment of twists to the optical fiber 200 as described above. In this configuration, the coated optical fiber 200 is in contact through a turn with the roller surface of the twist imparting roller 220. This arrangement causes the coated optical fiber 200 to be guided in the positioned state relative to the twist imparting roller 220, thereby suppressing the rolling of the coated optical fiber 200 relative to the roller surface of the twist imparting roller 220.

By suppressing the rolling of the coated optical fiber 200 in this way, an adequate torque is applied to the optical fiber, independent of the drawing conditions and others, without rolling of the coated optical fiber 200 while the twist imparting roller 220 rotates about the second rotational axis C2; therefore, the twists are efficiently imparted to the heated and softened part of the optical fiber. This succeeds in effectively imparting the twists to the optical fiber during the drawing operation, whereby it becomes feasible to adequately reduce the polarization mode dispersion while suitably maintaining the other transmission characteristics in the optical fiber.

In the present embodiment, the second rotational axis C2 is set so as to minimize the variation in the guide positions before and after the contact portion 202 with the roller surface of the twist imparting roller 220, relative to the coated optical fiber 200 guided by the twist imparting roller 220.

At this time, the variation is adequately reduced in the guide positions of the coated optical fiber 200 guided by the twist imparting roller 220, independent of the rotational motion of the twist imparting roller 220 in the lateral direction of the roller approximately normal to the guide direction. This restrains degradation and destabilization of the drawing conditions and coating conditions that could be caused by the impartment of twists to the coated optical fiber 200 through the rotational motion of the twist imparting roller 220 accordingly.

The V-groove 221 is formed as a rolling preventing mechanism in the roller surface of the twist imparting roller 220. By providing the twist imparting roller 220 with the rolling preventing mechanism in this way, it becomes feasible to securely apply the torque for impartment of twists to the optical fiber. Therefore, in conjunction with the effect by the winding of the coated optical fiber 200 around the twist imparting roller 220, the efficiency is further improved in the impartment of twists to the optical fiber by the rotation of the twist imparting roller 220.

Since the present embodiment is configured to minimize the variation in the guide positions of the coated optical fiber 200 as described above, the stationary guide rollers 210, which are located upstream of the twist imparting roller 220 as shown in Fig. 1, do not always have to be installed. As constructed even in the configuration provided with the upstream stationary guide rollers 210, because the motion of the coated optical fiber 200 is small at the twist imparting roller 220, friction appears low between the coated optical fiber 200 and the roller surface of the guide roller 210. It is thus feasible to keep down the effect of harming the impartment of twists to the optical fiber by the provision of the guide rollers 210.

Concerning the rotational motion of the twist imparting roller 220 about the second rotational axis C2, the number of clockwise rotations is preferably set approximately equal to the number of counterclockwise rotations, because it liberates the optical fiber from twists in a finally wound state through the drawing operation.

The following will describe a configuration of a driving means for rotationally driving the twist imparting roller 220 shown in Figs. 2A-2C, and a driving method thereof.

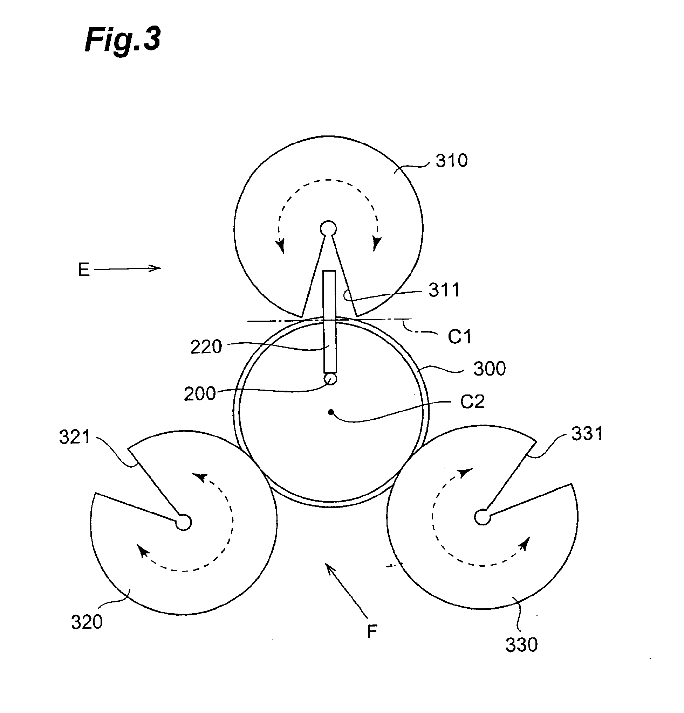

Fig. 3 is a top plan view showing a configuration example of the driving means for the twist imparting roller shown in Figs. 2A-2C. This Fig. 3 corresponds to Fig. 2A as a view of the twist imparting roller 220 from the drawing section and coating section side (or from the vertically upper side). In Fig. 3, the coated optical fiber 200 and the twist imparting roller 220 are illustrated in simplified structure, for example, by omitting the configuration of the coated optical fiber 200 wound on the twist imparting roller 220 from the illustration.

In the present configuration example, the twist imparting roller 220 is attached to a roller fixing ring 300. The roller fixing ring 300 is formed in circular shape with its center on the second rotational axis C2 (cf. Fig. 2A), set for the twist imparting roller 220, and along the locus L2 of the rotational motion about the second rotational axis C2 and in the lateral direction of the roller. The twist imparting roller 220 is fixed to the roller fixing ring 300, so as not to move in the circumferential direction of the ring.

The twist imparting roller 220 is arranged to be able to smoothly rotate on its rotational axis, which is located on the center of the roller fixing ring 300. For example, in the state shown in Fig. 3, the twist imparting roller 220 smoothly rotates about the first rotational axis C1 which is an axis equivalent to the center of the roller fixing ring 300 at the location of the twist imparting roller 220. This permits the twist imparting roller 220 to guide the coated optical fiber 200, as a guide roller.

On the outer periphery side of the roller fixing ring 300, there are three rotary gears 310, 320, and 330 set so as to surround the roller fixing ring 300. The roller fixing ring 300 is held by these rotary gears 310, 320, 330 and is arranged to rotate about the second rotational axis C2 with synchronized rotation of the rotary gears 310, 320, 330.

Specifically, while the rotary gears 310, 320, 330 rotate counterclockwise in synchronism with each other, the roller fixing ring 300 rotates clockwise about the second rotational axis C2. While the rotary gears 310, 320, 330 rotate clockwise in synchronism with each other, the roller fixing ring 300 rotates counterclockwise about the second rotational axis C2.

The rotary gears 310, 320, 330 are provided with respective cuts 311, 321, 331 at predetermined locations. These cuts 311, 321, 331 are provided so as to prevent the twist imparting roller 220 from interfering with each of the rotary gears 310, 320, 330 when the roller fixing ring 300 rotates to bring the twist imparting roller 220 attached to the roller fixing ring 300, to the position near each of the rotary gears 310, 320, 330. In this configuration, the roller fixing ring 300 is held by at least two rotary gears out of the three rotary gears 310, 320, 330.

By using the driving means of the above configuration comprised of the roller fixing ring 300 and the rotary gears 310, 320, 330, the twist imparting roller 220 becomes capable of the rotational motion for guiding the coated optical fiber 200, about the first rotational axis C1 and the rotational motion for imparting the twists to the coated optical fiber 200, about the second rotational axis C2. The size of the twist imparting roller 220 is, for example, approximately 50 mm in diameter.

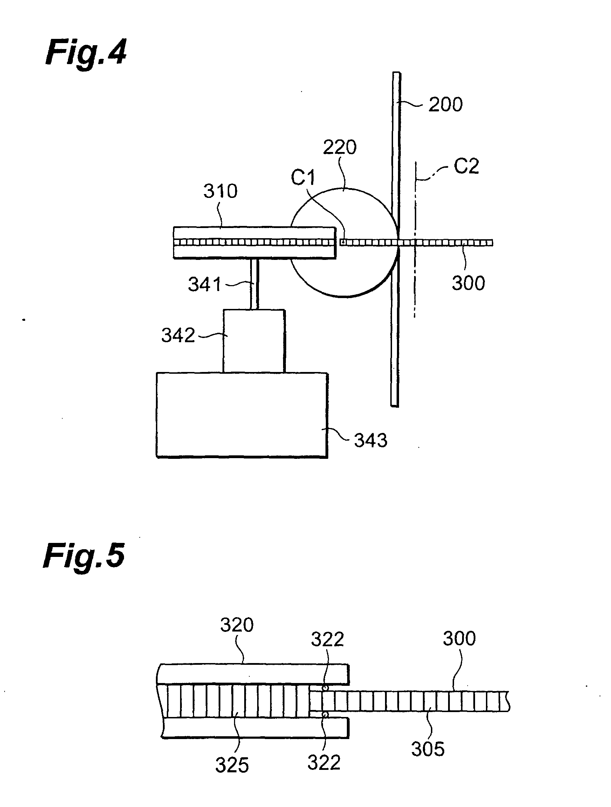

Fig. 4 is a side view showing a configuration of a driving system for the rotary gear in the driving means of the twist imparting roller shown in Fig. 3. Fig. 4 is a side view of the rotary gear 310 and the driving system thereof from the direction of arrow E in Fig. 3. Although configurations of the driving systems and others for the rotary gears 320, 330 are not illustrated, they are similar to the configuration of the driving system and others for the rotary gear 310 shown in Fig. 4. Since Fig. 4 shows a state in which the rotary gear 310 is located so as to avoid interference with the twist imparting roller 220 (cf. Fig. 3), the rotary gear 310 does not hold the roller fixing ring 300.

The rotary gear 310 is coupled through a motor shaft 341 to a motor 342 for rotationally driving the rotary gear 310. In this configuration, the rotary gear 310 is rotated with rotation of the motor 342, so that the roller fixing ring 300 and the twist imparting roller 220 attached to the roller fixing ring 300 are rotated about the second rotational axis C2.

In the configuration shown in Fig. 1, the twist impartment control unit 151 controls the rotation of the motor 342 provided for the rotary gear 310, together with rotation of motors provided for the respective rotary gears 320, 330. Through this control the twist impartment control unit 151 rotates the twist imparting roller 220 about the second rotational axis C2 according to a predetermined rotation pattern so as to impart the desired twists to the coated optical fiber 200.

The motor 342 is fixed to a motor attaching jig 343. Housed in the motor attaching jig 343 are a power cable for drive of the motor, a signal cable for control of the motor, and so on. Each of these cables is coupled to a power supply, a control device such as the twist impartment control unit 151, or the like.

Fig. 5 is a side view showing a coupling configuration between the rotary gear and the roller fixing ring in the driving means for the twist imparting roller shown in Fig. 3. This Fig. 5 is a side view of the rotary gear 320 and others from the direction of arrow F in Fig. 3.

The roller fixing ring 300 is held by a bearing 322 for ring guide in the rotary gear 320. This configuration is also applied similarly to the rotary gears 310, 330. Therefore, the roller fixing ring 300 is held by bearings in at least two rotary gears out of the three rotary gears 310, 320, 330. This permits the roller fixing ring 300 to be held at the stable position.

A side gear 325 provided in the rotary gear 320 engages with a side gear 305 provided in the roller fixing ring 300. Therefore, while the rotary gears 310, 320, 330 are rotated by the motors, the rotation thereof is transferred to the roller fixing ring 300. Then the twist imparting roller 220 attached to the roller fixing ring 300 rotates about the second rotational axis C2 and in the circumferential direction of the roller fixing ring 300. This results in imparting the desired twists to the coated optical fiber 200 guided by the twist imparting roller 220.

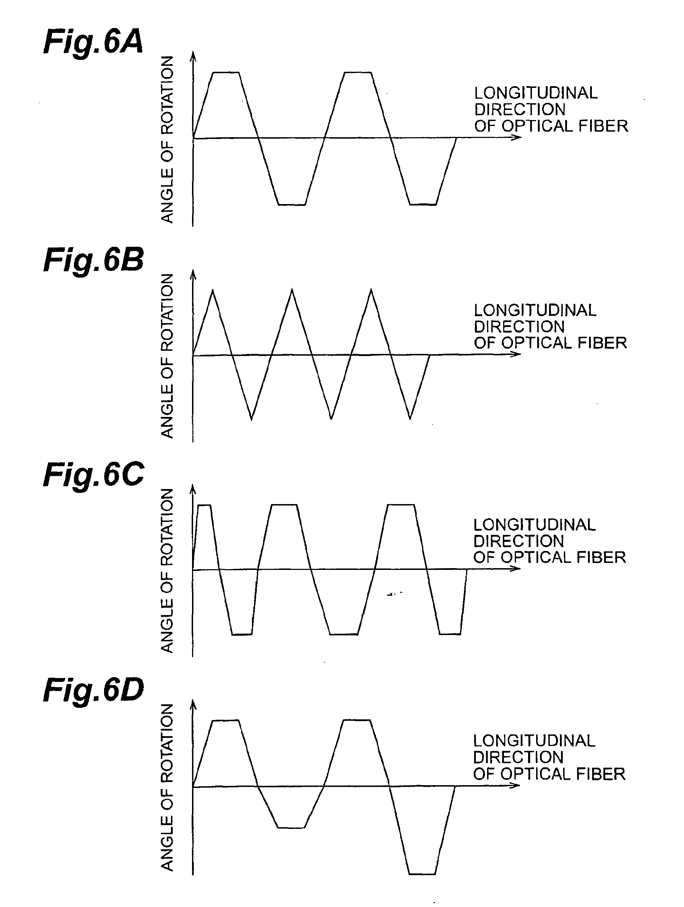

Figs. 6A to 6D are graphs showing examples of rotation patterns of the twist imparting roller. In each graph of Figs. 6A-6D, the horizontal axis represents positions along the longitudinal direction of the optical fiber to which the twists are imparted, and the vertical axis angles of rotation of the twist imparting roller about the second rotational axis C2 (which are positive clockwise). The rotation patterns shown in these graphs are set according to twists to be imparted to the coated optical fiber.

The longitudinal positions of the optical fiber indicated on the horizontal axis correspond to elapsed times in the drawing operation. The angles of rotation of the twist imparting roller on the vertical axis correspond to twists imparted to the coated optical fiber. In the configuration shown in Fig. 1, the rotation patterns of the twist imparting roller as shown in Figs. 6A-6D are executed in such a way that the twist impartment control unit 151 controls the operation of the twist imparting section including the twist imparting roller 220.

In the rotation pattern shown in Fig. 6A, clockwise and counterclockwise rotations at a constant rotational speed are repeated in identical periodic patterns in the range between predetermined rotational angles. On the occasion of switch between a clockwise rotation and a counterclockwise rotation, the rotation is stopped for a certain time.

In the rotation pattern shown in Fig. 6B, similar to Fig. 6A, clockwise and counterclockwise rotations at a constant rotational speed are repeated in identical periodic patterns in the range between predetermined rotational angles. On the occasion of switch between a clockwise rotation and a counterclockwise rotation, there is no stop time of rotation provided.

In the rotation pattern shown in Fig. 6C, clockwise and counterclockwise rotations are repeated in periodic patterns in the range between predetermined rotational angles. The pattern is similar to the pattern of Fig. 6A in that on the occasion of switch between a clockwise rotation and a counterclockwise rotation the rotation is stopped for a certain time and the rotation pattern consists of trapezoid patterns. In the present pattern, however, the rotational speeds, the length of the rotation stop time, etc. are different cycle by cycle.

In the rotation pattern shown in Fig. 6D, clockwise and counterclockwise rotations are repeated in periodic patterns. This pattern is similar to that of Fig. 6A in that on the occasion of switch between a clockwise rotation and a counterclockwise rotation the rotation is stopped for a certain time and the rotation pattern consists of trapezoid patterns. In the present pattern, however, the rotational speeds, the range of rotational angles of rotation, etc. are different cycle by cycle.

As exemplified in these graphs of Figs. 6A to 6D, it is possible to employ one of various rotation patterns, as a rotation pattern for the twist imparting roller for imparting the twists to the coated optical fiber.

As a rotation pattern consisting of alternate repetitions of clockwise and counterclockwise rotations in identical patterns like the rotation patterns shown in Figs. 6A and 6B, it is also possible, for example, to use a sinusoidal pattern of varying rotational speeds, in addition to the trapezoid pattern and the triangular pattern.

As a rotation pattern of rotational speeds varying cycle by cycle like the rotation pattern shown in Fig. 6C, it is possible to use any rotation pattern other than the trapezoid patterns. For example, a sinusoidal pattern can be a rotation pattern in which the rotational angles are given by the following function:

$$A\sin(\alpha z + \beta\sin(\gamma z)).$$

A variety of rotation patterns can also be used as rotation patterns with rotational angle ranges varying cycle by cycle like the rotation pattern shown in Fig. 6D. In the case of the rotation patterns with rotational angle ranges varying in this way, the final cumulative rotational angle in the clockwise rotations is also preferably set approximately equal to that in the counterclockwise rotations.

Figs. 7A to 7C are illustrations showing a configuration of another embodiment of the twist imparting roller 220 applied to the optical fiber producing apparatus shown in Fig. 1. Fig. 7A is a top plan view of the twist imparting roller 220 from the drawing section and coating section side (i.e., from the vertically upper side). Fig. 7B is a side view from the direction of arrow A in Fig. 7A, and Fig. 7C a side view from the direction of arrow B. The coated optical fiber 200 is guided from top to bottom via the twist imparting roller 220 on the side views of Fig. 7B and Fig. 7C.

In this twist imparting roller 220, as shown in Figs. 7A and 7B, a V-groove 222 is formed in the roller surface thereof. The V-groove 222 functions as a rolling preventing mechanism for preventing the coated optical fiber 200 from rolling relative to the roller surface of the twist imparting roller 220.

This V-groove 222 is formed through approximately two turns in the roller surface of the twist imparting roller 220 by V-groove working. The coated optical fiber 200, having passed the drawing section and the coating section in the producing apparatus shown in Fig. 1, is fitted in the V-groove 222 at the twist imparting roller 220 functioning as a guide roller, to be wound through two turns around the twist imparting roller 220 along the V-groove 222.

The twist imparting roller 220 has two rotational axes, a first rotational axis C3 for guiding the coated optical fiber 200 and a second rotational axis C4 for imparting the twists to the coated optical fiber 200. The twist imparting roller 220 smoothly rotates about the first rotational axis C3 like the ordinary rollers, thereby guiding the coated optical fiber 200, as a guide roller.

Furthermore, this twist imparting roller 220 is configured to be able to rotate in the directions indicated by a dashed line L4 on the top plan view of Fig. 7A, about the second rotational axis C4 passing the rotational center position of the twist imparting roller 220 present on the first rotational axis C3. Here the second rotational axis C4 is set approximately in parallel to the guide direction of the coated optical fiber 200. In the rotational motion about the rotational axis C4, therefore, the twist imparting roller 220 rotates in the lateral directions of the roller on the horizontal plane approximately normal to the guide direction of the coated optical fiber 200.

The following will describe the effects of the optical fiber producing apparatus with the twist imparting roller shown in Figs 7A-7C, and the optical fiber producing method using it.

In the optical fiber producing method and producing apparatus of the present embodiment, there is provided the twist imparting roller 220 capable of rotating about the first rotational axis C3 to guide the coated optical fiber 200 and rotating about the second rotational axis C4. When this twist imparting roller 220 is rotated in the lateral direction of the roller about the foregoing rotational axis C4, torsion occurs in the coated optical fiber 200. By transferring the torsion to the heated and softened glass part of the optical fiber, the desired twists can be imparted to the optical fiber, as in the case of the twist imparting roller in the embodiment shown in Figs. 2A-2C.

In the present embodiment, particularly, the coated optical fiber 200 is wound through two turns around the twist imparting roller 220 functioning as a guide roller and used for the impartment of twists to the optical fiber 200. In this configuration, the coated optical fiber 200 is in contact through two turns with the roller surface of the twist imparting roller 220. This improves the effect of suppressing the rolling of the coated optical fiber 200 relative to the roller surface of the twist imparting roller 220, whereby it becomes feasible to apply the torque for imparting the twists to the optical fiber more securely. The efficiency of impartment of twists to the optical fiber is also further improved by the V-groove 222 being the rolling preventing mechanism.

This succeeds in effectively imparting the twists to the optical fiber during the drawing operation, and it is thus feasible to adequately reduce the polarization mode dispersion while suitably maintaining the other transmission characteristics in the optical fiber.

In the present embodiment, the rotational axes C3 and C4 are set so that the first rotational axis C3 and the second rotational axis C4 both pass the rotational center position of the twist imparting roller 220. In this configuration, concerning the rotational motion of the twist imparting roller 220 in the lateral directions of the roller approximately normal to the guide direction of the coated optical fiber 200, the radius of rotation thereof and the range of rotational motion become smaller. This permits simplification of the structure of the rotating mechanism for the twist imparting roller 220 and others.

Since the radius of rotation becomes smaller, it is feasible to increase the rotational speed of the twist imparting roller 220. Since the increase in the rotational speed of the twist imparting roller 220 also increases the amount of twist imparted per unit length of the optical fiber, coupling occurs more frequently between polarizations in the optical fiber, so that the polarization mode dispersion can be further decreased.

In the present embodiment, the guide positions of the coated optical fiber 200 vary within a certain range in the vicinity of the twist imparting roller 220. Namely, with respect to the contact portion 202 of the coated optical fiber 200 with the roller surface of the twist imparting roller 220, the guide positions of the coated optical fiber 200 in the pre-portion 201 and the post-portion 203 before and after the contact portion vary about the second rotational axis C4. Fig. 7C shows an example of the variation in which dashed lines indicate locations of the pre-portion 204 and the post-portion 205 in the case where the guide positions of the coated optical fiber 200 have rotated 180°.

Against the variation in the guide positions of the coated optical fiber 200 as described, it is preferable to provide the stationary guide rollers 210 for suppressing the variation in the position of the coated optical fiber 200, upstream of the twist imparting roller 220, as shown in Fig. 1.

In this case, the guide rollers 210 exist between the portion of the coated optical fiber 200 undergoing the rotational motion at the twist imparting roller 220, and the heated and softened glass part of the optical fiber. In this configuration, it is also feasible to keep the friction low between the coated optical fiber 200 and the roller surfaces of the guide rollers 210, by adjusting the distance between the guide rollers 210 and the twist imparting roller 220, the size of the twist imparting roller 220, the material of the guide rollers 210, and so on. Accordingly, the present embodiment can keep down the effect of harming the impartment of twists to the optical fiber by the provision of the guide rollers 210.

The optical fiber producing method and producing apparatus according to the present invention do not have to be limited to the embodiments described above, but can be modified in various ways. For example, the V-shaped narrow groove is formed as a rolling preventing mechanism in the roller surface in either of the twist imparting rollers of the respective embodiments described above, but the rolling preventing mechanism is not limited to the V-groove; instead, it may be any other narrow groove, e.g., a U-shaped or recessed narrow groove. Alternatively, the roller surface may be processed so as to have another rolling preventing mechanism except for the groove.

The number of turns of the coated optical fiber around the twist imparting roller can be properly selected from one to several turns, according to the structure of the twist imparting roller, the positions of the rotational axes thereof, the structure of the other portions in the drawing apparatus, the drawing conditions, and so on.

Alternatively, it is also possible to employ a configuration other than the winding configuration of the coated optical fiber around the twist imparting roller, as a configuration of the twist imparting roller for guiding the coated optical fiber while positioning it relative to the roller. The twist imparting roller may be constructed of a combination of plural rollers.

The setting of each rotational axis in the twist imparting roller does not have to be limited to those in the examples shown in Figs. 2A-2C and in Figs. 7A-7C, but the setting may be modified in various ways in combination with the arrangement of the other guide rollers and the like. The second rotational axis for imparting the twists to the optical fiber can be set approximately parallel to the guide direction of the optical fiber so as to rotate the twist imparting roller laterally, and the rotational axis may be set with an inclination at a predetermined angle relative to the guide direction, for example. In addition, besides the rotational drive of the roller about the rotational axis, it is also possible to employ any other roller driving method capable of changing the position of the twist imparting roller in the lateral directions.

**Industrial Applicability**

The optical fiber producing method and producing apparatus according to the present invention are applicable as a producing method and producing apparatus capable of effectively imparting twists to the optical fiber during the drawing operation. Specifically, with the optical fiber producing method and producing apparatus using the twist imparting roller capable of changing its position in the lateral directions and guiding the coated optical fiber while positioning it relative to the roller, as a roller for guiding the coated optical fiber, it is feasible to effectively impart the twist to the optical fiber during the drawing operation and adequately reduce the polarization mode dispersion while suitably maintaining the other transmission characteristics in the optical fiber.

These optical fiber producing method and producing apparatus are applicable to production of various types of optical fibers, including 1.3μm-band single-mode fibers, dispersion-shifted fibers, and dispersion compensating fibers. Particularly, they are suitably applicable to production of optical fibers with large polarization mode dispersion (e.g., dispersion compensating fibers), such as optical fibers with the core doped with a large dopant amount of Ge.

**Claims**

1. A method of producing an optical fiber, comprising: a first step of drawing an optical fiber from an optical fiber preform; a second step of coating said optical fiber with a predetermined coating material; and a third step of imparting predetermined twists to a coated optical fiber which is said optical fiber coated with said coating material,
    wherein in said third step, said coated optical fiber is guided while being positioned by a twist imparting roller and a position of the twist imparting roller is laterally varied, thereby imparting the twists to the coated optical fiber.

2. The method according to Claim 1, wherein said twist imparting roller is configured so that said coated optical fiber is wound through at least one turn therearound,
    wherein in said third step, said twist imparting roller is rotated about a rotational axis present on a direction substantially parallel to a guide direction of said coated optical fiber, thereby imparting the twists to said coated optical fiber.

3. The method according to Claim 2, wherein in said third step, said rotational axis is set so as to substantially minimize variation in guide positions of said coated optical fiber at points before and after a contact portion with a roller surface of said twist imparting roller, relative to said coated optical fiber guided by said twist imparting roller.

4. The method according to Claim 2, wherein in said third step, rotations of said twist imparting roller about said rotational axis are defined so that the number of clockwise rotations is substantially equal to the number of counterclockwise rotations.

5. The method according to Claim 1, wherein said twist imparting roller has a rolling preventing mechanism for preventing said coated optical fiber from rolling relative to a roller surface of said twist imparting roller.

6. The method according to Claim 5, wherein said rolling preventing mechanism is a V-shaped, U-shaped, or recessed narrow groove which is formed in the roller surface of said twist imparting roller and in which said coated optical fiber is fitted.

7. An apparatus for producing an optical fiber, comprising drawing means for drawing an optical fiber from an optical fiber preform; coating means for coating said optical fiber with a predetermined coating material; and twist imparting means for imparting predetermined twists to a coated optical fiber which is said optical fiber coated with said coating material,
    wherein said twist imparting means comprises a twist imparting roller for guiding said coated optical fiber while positioning said coated optical fiber and said twist imparting means laterally varies a position of said twist imparting roller, thereby imparting the twists to said coated optical fiber.

8. The apparatus according to Claim 7, wherein said twist imparting roller is configured so that said coated optical fiber is wound through at least one turn therearound,

    wherein said twist imparting means rotates said twist imparting roller about a rotational axis present on a direction substantially parallel to a guide direction of said coated optical fiber, thereby imparting the twists to said coated optical fiber.

9. The apparatus according to Claim 8, wherein in said twist imparting means, said rotational axis is set so as to substantially minimize variation in guide positions of said coated optical fiber at points before and after a contact portion with a roller surface of said twist imparting roller, relative to said coated optical fiber guided by said twist imparting roller.

10. The apparatus according to Claim 8, wherein in said twist imparting means, rotations of said twist imparting roller about said rotational axis are defined so that the number of clockwise rotations is substantially equal to the number of counterclockwise rotations.

11. The apparatus according to Claim 7, wherein said twist imparting roller has a rolling preventing mechanism for preventing said coated optical fiber from rolling relative to a roller surface of said twist imparting roller.

12. The apparatus according to Claim 11, wherein said rolling preventing mechanism is a V-shaped, U-shaped, or recessed narrow groove which is formed in the roller surface of said twist imparting roller and in which said coated optical fiber is fitted.

13. The apparatus according to Claim 7, comprising twist impartment control means for controlling the operation of said twist imparting means including the lateral variation in the position of said twist imparting roller so as to impart the desired twists to said coated optical fiber.

# Fig.1

## Fig.2A

## Fig.2B

## Fig.2C

## Fig.3

**Fig.4**

**Fig.5**

*Fig.6A*

*Fig.6B*

*Fig.6C*

*Fig.6D*

## Fig.7A

## Fig.7B

## Fig.7C

## INTERNATIONAL SEARCH REPORT

| International application No. |
|---|
| PCT/JP01/09835 |

| A. CLASSIFICATION OF SUBJECT MATTER |
|---|
| Int.Cl⁷   G02B 6/00, C03B 37/027 |

According to International Patent Classification (IPC) or to both national classification and IPC

| B. FIELDS SEARCHED |
|---|

Minimum documentation searched (classification system followed by classification symbols)
Int.Cl⁷   G02B 6/00-6/54, C03B37/027

Documentation searched other than minimum documentation to the extent that such documents are included in the fields searched
Jitsuyo Shinan Koho        1922-1996     Toroku Jitsuyo Shinan Koho  1994-2002
Kokai Jitsuyo Shinan Koho  1971-2002     Jitsuyo Shinan Toroku Koho  1996-2002

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 5701376 A (FUJITSU LIMITED), | 1-2,4,7-8, |
|   | 23 December, 1997 (23.12.1997), | 10,13 |
| Y | Column 10, line 60 to Column 11, line 47; Figs. 6, 8 | 3,5-6,9, |
|   | & JP 09-043443 A | 11-12 |
|   |   |   |
| X | US 6076376 A (SUMITOMO ELECTRIC INDUSTRIES, Ltd.), | 1,7 |
| Y | 20 June, 2000 (20.06.2000), | 2-6,8-13 |
|   | Full text; all drawings |   |
|   | & JP 08-295528 A     & AU 4584296 A |   |
|   | & EP 729919 A2       & EP 795521 A1 |   |
|   | & JP 09-243833 A     & AU 690414 B |   |
|   |   |   |
| X | US 5704960 A (CORNING, Inc.), | 1,7 |
| Y | 06 June, 1998 (06.06.1998), | 2-6,8-13 |
|   | Full text; all drawings |   |
|   | & JP 11-501133 A     & AU 1288097 A |   |
|   | & WO 97/22897 A1     & CA 2210470 A |   |
|   | & EP 811176 A        & CN 1176005 A |   |
|   | & US 5822487 A1      & AU 705950 B |   |
|   |   |   |
| X | EP 582405 A1 (AMERICAN TELEPHONE & TELEGRAPH COMPANY), | 1,7 |
| Y | 09 February, 1994 (09.02.1994), | 2-6,8-11 |

| ☒ Further documents are listed in the continuation of Box C. | ☐ See patent family annex. |
|---|---|

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 February, 2002 (04.02.02) | 12 February, 2002 (12.02.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

18

EP 1 357 404 A1

## INTERNATIONAL SEARCH REPORT

International application No.

PCT/JP01/09835

C (Continuation).   DOCUMENTS CONSIDERED TO BE RELEVANT

| Category* | Citation of document, with indication, where appropriate, of the relevant passages | Relevant to claim No. |
|---|---|---|
| | Full text; all drawings<br>& CA 2098747 A        & CN 1083449 A<br>& JP 06-171970 A      & US 5298047 A | |
| PX<br>PY | JP 2001-302272 A (Fujikura Ltd.),<br>31 October, 2001 (31.10.2001),<br>Par. Nos. [0016]-[0022],<br>Figs. 1 to 2   (Family: none) | 1,5-7,11-12<br>3,9 |

Form PCT/ISA/210 (continuation of second sheet) (July 1992)

19